# EUROPEAN PATENT APPLICATION

(11) **EP 1 087 350 A1**
(43) Date of publication of application: **28.03.2001**
(21) Application number: 99650088.0
(22) Date of filing: 22.09.1999
(51) Int. Cl.: G07F 19/00, G07F 7/08, G06F 17/60

(54) **A method for the secure transfer of payments**

(71) Applicant: TRINTECH LIMITED, Dublin 18 (IE)
(72) Inventor: Hamilton, Christopher John, Texas 78746 (US); Wells, Lisa Kay, Austin, TX 78727 (US); Brahmbhatt, Bhagwat c/o Trintech Group, San Mateo, CA 94403-2590 (US)
(74) Representative: Schütte, Gearoid

(57) **Abstract**

A method for the secure transfer of payments over a network sales system. The system includes a plurality of card holder computers (4), a card issuer computer (6), merchant computers (3) and at least one merchant payment acquirer computer (11). Card holder account details are stored in a secure database (7) by the card issuer (5). When a card holder computer (4) wishes to make a transaction with a merchant computer (3) the card holder must enter a password or PIN number to have access to their account. The transaction may be verified by the card issuer (5) or the payment acquirer computer (11). An important aspect of the invention is that for each transaction there is a dedicated communications channel between the card holder computer (4) and the merchant computer (3) that can be controlled by the card issuer (5).

## Description

The present invention relates to a method for the secure transfer of payment and related purchase information over a network sales system for a payment card-not-present transaction, including a plurality of card holder computers, a card issuer computer, merchant computers and a merchant payment acquirer computer, all interconnected by a communications network.

In this specification the term "payment card" is used to encompass not alone what is considered generally as being a credit card, but also debit cards and any other issued cards which can be used by consumers, or corporate purchasers, for the payment for goods and services and a "payment card transaction" as used in this specification refers to the use of any such payment card in a transaction.

Electronic commerce is growing at a phenomenal rate. Because payment cards are recognised as the one globally accepted means of payment, they are the ideal payment method for the purchase of goods and services over open networks like the Internet. However, the use of payment cards over open networks raises fears and anxiety as payment card information has to be transferred to a third party while the payment card is not present. Thus, a third party, generally the merchant, gets all the payment card details of the card holder including the payment card number and expiry date. This is perceived, whether correct or not, to be a considerable security risk for the payment card holder, not alone due to the misuse of the payment card in the third party's hands, but more importantly the possible lack of security in the transfer of the information over the Internet. It is therefore essential, if electronic commerce is to continue to grow, that the purchaser be able to use their payment card in an absolutely secure manner. Further it is essential for the payment card holder be able to use the payment card for electronic commerce in substantially the same way as the payment card holder uses a payment card for card-present transactions. In card present transactions the card holder proffers a payment card in an establishment, the payment card slip is printed for the payment card holder, who then signs the payment card slip, obtains a receipt, and is secure in the knowledge that the receipt corresponds to what they have paid.

One of the interesting facts in relation to electronic commerce is that a research organisation report by Forrester Research states that something on the order of two thirds of on-line shopping carts are abandoned prior to completing a purchase. It is suggested that the primary reason for this is the complex nature of the payment systems.

Many vendors have developed comprehensive Internet payment applications that store card holder information and automatically fill out complex and detailed merchant forms when the shopper wants to buy. These applications, typified as electronic wallets, simplify and secure the process of on-line buying. While traditional electronic wallets are the more common approach they have proven to be spectacularly unsuccessful in market acceptance. They are something that those who are technologically skilled immediately appreciate and understand, however, the general consumer is reluctant to use them. Indeed it has been suggested that virtually none of the $13 billion in on-line purchases by consumers in 1998 was made with electronic wallets.

Consumers will be much more likely to engage in electronic commerce if on-line card payments can be accomplished as simply and conveniently as a traditional card-present payment. Once card holders can conveniently and securely buy on-line, it is suggested that the purchase volume taking place on-line will greatly increase.

Even so, electronic commerce has grown without the active involvement of the card issuers with their customers. While the financial institutions including the card issuers have made significant investments to support on-line commerce, particularly in establishing the Secure Electronic Transaction (SET) standard, they have not yet recognised any tangible marketing advantage. It would appear that the financial institutions' investment in payment technology has simply kept them up to date with developments in electronic commerce.

The financial institutions are well aware of the need to maintain brand awareness with their customers. There is a recognised need for the card issuer to transmit advertisements to the card holders when purchase transactions are taking place, especially ideally when the card issuer's payment card is being used. The card issuer has a strong need to reinforce the card issuer's corporate and brand identity, and Trade Marks.

In summary electronic commerce is growing rapidly and payment cards are the Internet payment option of choice. Financial institutions have an opportunity to capitalize on this growth. Card holders must feel secure about sending their card details over the Internet and they need the necessary tools to facilitate simple yet secure Internet payments. Card issuers need an effective tool to maintain strong customer relations and reinforce the value proposition they offer their card holders.

The present invention is directed towards overcoming these problems. In particular to allow a payment card to have all the attributes of an electronic wallet such as allowing the payment card to be used securely for electronic commerce, and further that ideally it should allow the same process the consumer is familiar with when using a payment card in a card-present transaction. Finally, the invention is directed towards providing a method and system allowing the card issuer to maintain dose client contact with the card holder, providing a marketing channel of communication and other opportunities for the card issuer.

### Statements of Invention

According to the invention there is provided a method for the secure transfer of payment and related purchase information over a network sales system for a payment card transaction, the system including a plurality of card holder computers, a card issuer computer, merchant computers and at least one merchant payment acquirer computer comprising:
the initial act of downloading payment card configuration and initiation data from the card issuer to the card holder computer and then there is subsequently performed the acts not necessarily in this order of:
a payment request is sent from the merchant computer to the card holder computer,
the card holder computer contacts the card issuer computer and issues a transaction initiation request;
the card issuer computer opens a direct communications link with the card holder computer;
the card holder computer sends merchant and purchase information to the card issuer computer
the card issuer computer sends card payment information to the merchant computer,
the card holder computer causes confirmation of the payment to be sent to the card issuer computer;
the card issuer computer confirms the payment authorisation to the merchant computer; and
the merchant computer confirms the transaction.

The advantage of this is twofold; the issuer carries out the payment tasks usually performed by the cardholder, and a direct and unobstructed channel of communication is established with the cardholder at the time of the payment transaction. An additional advantage is that all of the information for payment and purchase is displayed on the screen and the user can alter this prior to final transmission or submission to the merchant computer to complete the payment authorisation request.

Ideally subsequent to the card holder computer sending merchant information to the card issuer computer, the card issuer computer sends the merchant payment information to the card holder computer. It is envisaged that the card issuer computer would contain all the necessary information on a merchant which would then be downloaded automatically onto the card holder's screen displaying the information for the payment of the merchant.

Additionally on sending payment authorisation to the merchant computer the payment authorisation and purchase information is sent by the card issuer computer to the merchant payment acquirer computer. This has considerable advantages in that it warns the card issuer in advance of the possible purchase that the necessary arrangements can be made that may be required by the card issuer computer to receive the eventual purchase payment information.

Ideally on the card issuer computer sending card payment information to the merchant computer the steps are performed of:
the merchant computer places a payment card authorisation request with the merchant payment acquirer computer;
the merchant payment acquirer computer contacts the card issuer computer
the card issuer computer on receiving authorisation from the card holder computer authorises the payment to the merchant payment acquirer computer; and
the card issuer computer confirms the authorisation to the merchant payment acquirer computer.

This allows the information on payment to be downloaded to the merchant payment acquirer computer in real time rather than in batches from the merchant computer as is usually the situation. The great advantage of this is that in the event of errors or omissions in the information they can be rectified in real time and not at a subsequent date which can be difficult, particularly when batch payment is sent by the merchant computer to the merchant payment acquirer computer.

Any suitable channels of communication may be opened to ensure payment authorisation whether from card issuer to the payment acquirer via the merchant, or directly to the payment acquirer and then to the merchant, or simultaneously to the merchant and acquirer. The permutations and combinations are many.

Ideally the card issuer computer stores all the payment card information and preferably the card holder computer stores communications and other protocols including an authentication protocol for initiating the use of the method. In this way the card issuer computer contains all the relevant information which adds to the security of the system in that even if the card holders computer was to be compromised the risk of data being acquired by third parties is slight.

Ideally the card issuer computer downloads all relevant merchant card and purchase information as a merchant payment form to the card holder computer during the transaction.

Ideally, merchant payment page profiles and other information is stored by the card issuer computer in a merchant database. Such a database allows the issuer's computer to download the appropriate card holder payment card information quickly, efficiently, and correctly into any given merchant's payment page. In some situations the payment card issuer may not have merchant payment details. When it doesn't; the merchant can be contacted directly to obtain the details, or an automated mechanism on the issuer's computer can profile the merchant's payment form, or the merchant payment form may be profiled directly by the card holder manually filling out the form and the issuer's computer recognising the association between the information inputted into its respective place on the form.

Ideally the merchant payment form is displayed on the card holder computer in the same format as that of a conventional card payment slip during a card present transaction.

Preferably during the purchase and payment transaction until the card holder computer authorises payment the card holder computer can alter the transaction.

Ideally the card holder computer displays messages from the card issuer computer during the transaction said messages being additional to those required for the operation of the transaction which messages may be displayed during time intervals when the display of transaction information is not required. These messages may be linked to merchant information stored in the card issuer computer, card holder information on the card issuer computer, or indeed the messages may be linked to purchase information sent to the card issuer computer in the current or previous payment card transactions.

Additionally as explained the card holder computer preferably sends with the merchant information purchase information. This gives the card issuer further information to allow suitable messages to be sent to the card holder computer.

Additionally, the card holder computer can display marketing messages, advertising, or other relevant communications from the card issuer computer during the transaction.

The messages are linked to card holder profile information stored in the card issuer computer, or to merchant and purchase information sent to the card issuer computer. This provides the card issuer with a marketing opportunity. When the card issuer is aware that somebody is, for example, purchasing automobile parts, it is relatively easy for the card issuer to target that person with advertisements on automobile finance. Similarly, the level of purchase and the type of purchase will also alert the card issuer to advertisements that the card holder might be interested in. The advertisements do not necessarily have to be services provided by the card issuer. The card issuer could, for example, agree to take advertisements for others knowing that a card holder is purchasing goods, for example, from a book supplier such as AMAZON. It would then be possible for the card issuer to download advertisements for book clubs or other literary matters with the Issuer being compensated for performing the advertising service.

Ideally the merchant card and purchase information are printed in the form of a card-present payment card payment slip by the card holder computer on completion of the transaction claim.

The payment application on the card holder computer can administer all relevant merchant, card and purchase information associated with past on-line purchase transactions, regardless of storage location. This information is visually depicted by a graphical representation of a physical charge slip. The consumer is used to such payment slips and the card holder computer now displays a payment slip identical in general form to the payment slip that would be presented by the merchant as if it was a card-present transaction.

Ideally subsequently the card issuer computer sends to the card holder computer a payment card charge slip, but the card issuer computer may store a payment card charge slip for future transmission.

The respective data embodied by the virtual charge slip can be embedded or linked to the virtual charge slip and can be invoked at a later time for a wide variety of purposes.

Ideally the merchant, card and purchase information are stored locally or remotely and this information can be subsequently printed in the form of a card-present payment card payment slip or in other formats. These printed records can be used to reconcile the payment card statement if the card holder does not reconcile his or her payment card on the computer.

Once the relevant card holder information is provided to the merchant's computer, a credit authorisation request can be placed with the merchant's payment card acquirer or processor. It should be noted that transmission of the request is not restricted to networks, Internet or otherwise, and can include many traditional physical means of communication. The payment card acquirer or processor then submits the authorisation request to the payment card issuer's computer, typically through the respective payment card interchange network, and then receives a payment authorisation response in return. Once the authorisation response it returned, the merchant advises the card holder of the authorisation response result, and if authorised, completes the purchase transaction to achieve settlement.

Payment settlement to the merchant is begun when the merchant submits a request for data capture to its acquiring bank or processor, namely the merchant payment acquirer computer. The process flow for data capture is substantially the same as for authorisation, except that if the data capture request is approved additional processes are instigated leading to the actual transfer of monetary funds between the cardholder's issuer bank and the merchant's acquirer bank.

The invention provides a significant improvement in the efficiency of these processes by reducing the number, and changing the order, of the steps required to perform an authorisation request, with it's related response, for the merchant. Ideally, at the time the issuer's computer provides card holder information to the merchant's computer, an assessment can be made based on the payment information provided by the merchant's computer for the specific purchase the card holder is in the process of making. By performing the authorisation process at the time of providing card holder payment information, a pre-authorisation can be provided to the merchant's computer, eliminating the need for the merchant to place additional authorisation requests. There are many benefits to this approach to the authorisation process, including improvements in process efficiency, increased satisfaction through reduced response times to the card holder, and reduction of merchant authorisation processing costs as the issuer's computer can deny pre-authorisation resulting in elimination of authorisation charges for non-approved transactions.

Ideally all relevant data is encrypted for transmission over the communications network. This can be relatively easily achieved.

It is also envisaged that the card holder's payment card number is not transmitted to the merchant computer, a purchase payment authorisation number being used when transmitting payment authorisation to the merchant computer the payment card number being only issued to the payment acquirer computer. The advantage of this is that the payment card number of the card holder is never transmitted to merchants and thus additional security is provided.

While it is envisaged that much of the electronic commerce will take place over the Internet will use a computer, it is also envisaged that mobile phones could be programmed to provide the necessary service. The use of a mobile phone can act as a small footprint input/output device for conducting electronic commerce transactions. In this regard, the mobile phone would be used in substantially the same way as a computer. The invention, due to the small size of the distributed payment application, the increased efficiency delivered, and reduced response times makes the use of mobile phones for such applications practical.

### Detailed Description of the Invention

The invention will be more clearly understood from the following description of an embodiment thereof, given by way of example only described with reference to the accompanying drawings in which:
Fig. 1 is a broad outline of the eCommerce Network;
Figs. 2 to 4 are flow diagrams of a typical purchase of goods or services using the present invention; and
Fig. 5 is a functional diagram of how the invention operates in practice for the parties;

Since effectively the present invention produces an electronic version of a card holder's existing card or payment card, it has been for convenience in this specification referred to sometimes as an eCard or an ezCard, which are proprietary names we have chosen for them. In this specification it is represented in the distinctive form ezCard. The reason for this is that ezCards are simply virtual versions of an existing payment or debit card, which enables card holders to conveniently and securely buy on-line. The distribution activation of the ezCard mirror the established process for physical cards since both are issued by the same source, namely the card issuer. The ezCard is never embodied physically.

It is envisaged that these ezCards will be issued for established debit or payment card accounts and therefore billing address, card holder name, payment card number and expiration date are not configurable by card holders. However, this information will correspond directly to the card issuers account information on which the ezCard is issued.

The whole purpose of the present invention, as will be described hereinafter is that the ezCard mirrors the familiar and well understood distribution and activation process of a physical payment card, often hereinafter referred to simply as a payment card, the ezCard mirrors the existing physical payment cards for virtual use on the Internet.

In this specification information and data is described as being continuously transmitted between the parties. Rather than make the description complex and unwieldy and thus difficult to understand it is taken as read that the type and nature of the information being transmitted is that appropriate for the task in hand. Thus, for example, merchant information transmitted to the card issuer by the card holding computer might be the minimum to allow the merchant to be identified, the information sent to the same merchants payment acquirer would of necessity contain more details such as account number etc.

Further the term 'computer' is used in the broadest way and in many instances more appropriate wordings would be organisation; database; etc. However, as in most instances a computer, mobile phone, or some other instrument, device, or machine will be the contact device used. The term computer is used as it appeared to be the one most likely to be used and thus the most appropriate term.

As will be seen from the following description the present invention conveniently and automatically fills out merchant payment pages using a "drag and drop" metaphor.

A further feature of the present invention as will be apparent from the following description is that it allows a wide variety of messages, including marketing information and advertising, to be transmitted by the card issuer to the card holder every time a purchase is made.

A key capability of the invention is that when the ezCard is invoked, and the issuer's computer is contacted, a clear and unobstructed channel of communication is established between the issuer and the card holder. This channel of communication enables the issuer to reinforce its corporate and brand identity at every such instance. Even more importantly, any involved intermediaries such as Internet portals, Internet service providers (ISP's), other advertisers, and even the merchant itself, are automatically subordinated. This is a key consideration for issuers who otherwise are at the mercy of such intermediaries. In summary, the invention provides protection from brand disintermediation from any such intermediaries.

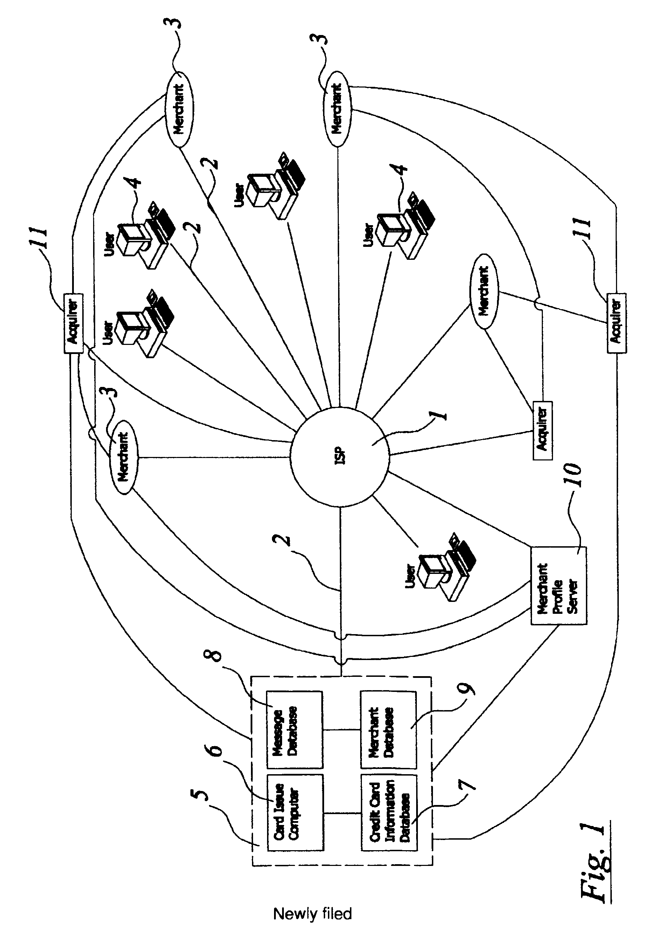

Referring now to Fig. 1 there is illustrated an Internet service provider (ISP) 1 connected by communication links 2 to a plurality of merchant computers 3 and card holder computers 4, which card holder computers 4 will be used by the card holder to make necessary purchases of goods and services from the merchant computers 3. Connected to the Internet service provider 1 is a card issuer 5, which card issuer will include and have a card issuer computer 6, a payment card information database 7, a message database 8 and a merchant database 9. The merchant database 9 is linked to a merchant profile server 10 which stores relevant merchant information for a number of Internet service providers and card issuers. All of these may in fact be contained in the one card issuer computer, however, for convenience it is easier to separate them. The merchant computers 3 are in turn linked to merchant payment acquirer computers 11. This could be as shown by direct link, but could be via the ISP. All other communications links which could be or are established are not shown.

It will be appreciated that for the particular Internet service provider that there could be a number of card issuers connected directly to the Internet service provider and similarly the one card issuer could be connected to a number of Internet service providers, however, to illustrate them in the drawings would merely confuse the issue.

Essentially there are four organisation involved in the purchase and payment transaction. The first is the customer, namely the card holder having a computer downloaded onto which is sufficient data from the card issuer to allow the card holder to contact the card issuer and display information as required. The card issuer computer is the second element in the transaction. The card issuer computer carries all the payment card details, together with merchant information sufficient to allow a full transaction to be carried out. The merchant then carries out the necessary payment request and purchase confirmation while the fourth party namely the merchant payment acquirer receives any funds that the merchant should receive for the delivery of the goods from the card issuer. Very often with such remote trade the payment cannot be made immediately the sale or transaction has been carried out because the goods may not have been delivered by the merchant. Thus, what normally happens is that the merchant gathers in batches a considerable number of transactions throughout the day, delivers them to the merchant's payment acquirer and the payment acquirer contacts the card issuer and the card issuer prepares to make the necessary payments, which payments are not made until it is confirmed that the goods have been dispatched. It will be appreciated that in some cases not all the goods included in a particular order will be dispatched at the same time, thus there can be payments made on a staged basis.

As explained already all of these principals or organisations are connected over the Internet.

While in the following two related methods of carrying out the invention are described, it will be appreciated that many variations may be made in what is essential the one method depending on the circumstances.

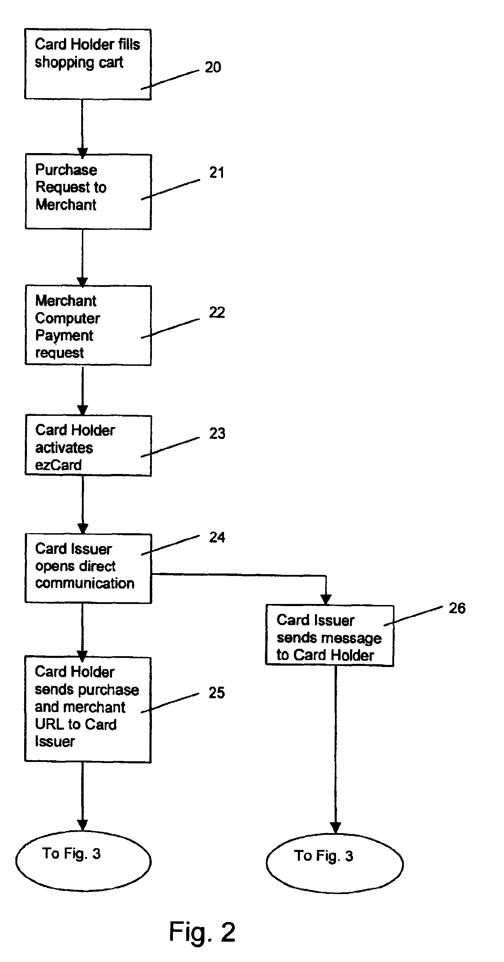

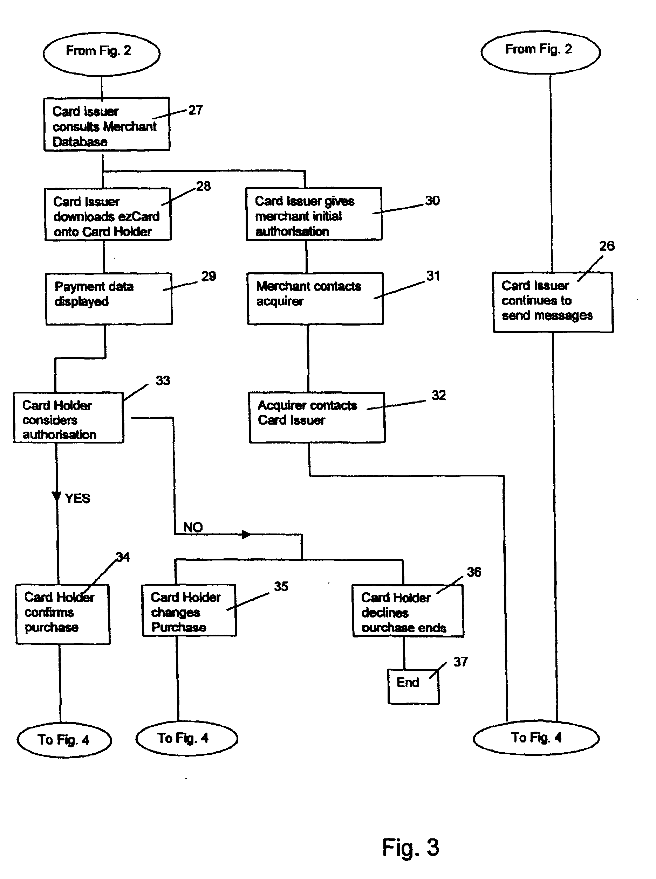

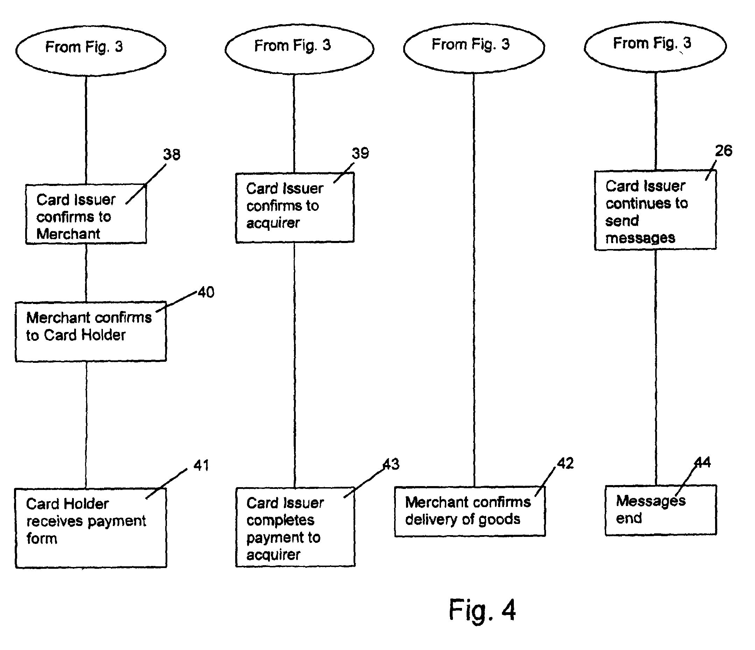

Referring now to Figs. 2 to 4 inclusive, it is presumed that the system has already been set up and that the card holder computer has sufficient information to allow the card holder to contact the card issuer and the card issuer already has merchant information and also merchant payment acquirer information sufficient to contact the merchant payment acquirer computer i.e. the ezCard is operative.

In step 20 the card holder computer has been in contact with the merchant computer and the card holder has filled out a shopping cart and has transmitted this to the merchant in step 21. The merchant then downloads a payment request in step 22 to the card holder computer for payment. In step 23 the card holder activates the ezCard usually by simply clicking an icon on the computer screen, usually some form of password will be required, and the password is inputted. This causes contact with the card issuer computer, which in step 24 opens direct communication with the card holder computer, disintermediation is now prevented.

In step 25 the card holder sends purchase and merchant URL to the card issuer which now has available to it certain information. Simultaneously the card issuer starts to send messages to the card holder in step 26 and these messages continue to be sent to the card holder computer. These messages, as explained below, can be various advertisements, dependent on the information already downloaded in relation to the merchant, they can be linked in some way to information already contained in the card issuer's computer about the card holder, they can be linked to the specific purchase of goods and services being initiated and so on.

In step 27 the card issuer consults the merchant database and in step 28 the card issuer downloads the ezCard to the card holder including all the merchant information. Generally speaking what will now be displayed on the card holder's computer would correspond very closely to the standard card payment transaction slip. This is all done in step 29.

Simultaneously to step 28 the card issuer in step 30 contacts the merchant computer and provides initial authorisation to the merchant computer. In step 31 the merchant computer contacts the merchant payment acquirer and in step 32 the acquirer contacts the card issuer. In step 32 the card holder who now has the total data displayed considers authorisation of purchase to the merchant and may immediately proceed in step 34 to authorise payment. Alternatively, in step 35 the card holder changes the purchase by altering the payment data that has previously been displayed in step 29, or, may alternatively decline the purchase in step 36 when the process then ends in step 37.

Thus, in step 38 the card issuer confirms to the merchant the payment as the card holder has authorised the payment. The card issuer in step 39 contacts the merchant payment acquirer to confirm the order and agrees to the payment terms. In step 40 the merchant confirms to the card holder that the necessary transaction has been accepted.

In step 41, the card holder receives a final card payment form. This final card payment can be in any suitable format

In step 43 the card issuer completes the payment to the merchant payment acquirer on confirmation of the dispatch of the goods in step 42 by the merchant. At the same time in step 44 the messages end to the card holder computer.

The above is a relatively line of one way of carrying out the invention, but it will be appreciated that there are many variations of it. For example, the payment slip or document that is displayed by the card holder can be stored, can be delivered afterwards as a payment receipt and so on.

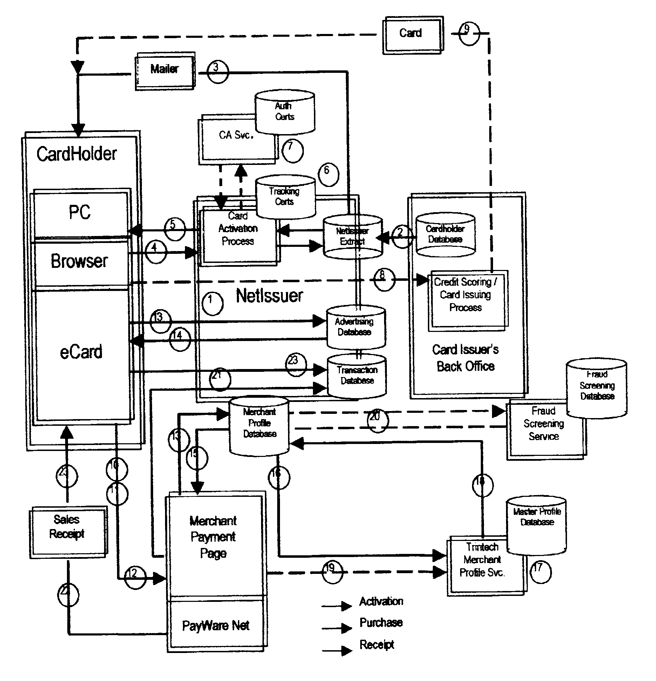

Referring now to Fig. 5 there is illustrated the functional operation of the invention insofar as the parties to the transaction view it and in this drawing the electronic element of the card issuers' operations are separated from the normal card issuer's operations which are identified as the card issuer's back office and the former is identified by the term net issuer.

In this particular example of the invention, there is provided a separate merchant profile service (10 in Fig. 1) which retains a master database of known merchant profiles, which are continuously updated and this will ensure that the merchant database (9 in Fig. 1) will be continuously updated. This means that when, for example, there is any change in a merchant profile this is sent to all card issuers connected in the particular network to that Internet service provider, or indeed connected to other Internet service providers. The circled numerals in Fig. 5 identify the operations listed below.
1. Card issuer installs the system on a secure server at their site, or the site of an outside service provider.
2. A target group of cardholders is identified who would be active users of electronic cards, based on purchases previously charged to card accounts (such as recurring ISP charges, computer and software purchases, or purchases at Internet merchants such as amazon.com or peapod.com). A cardholder extract file is built of card account details and is exported to the system.
3. The system is customized for appearance, ezCard security features, and the advertising server to deliver targeted messages to cardholders when they use their ezCards. A promotional mailer is made to card-holders in the target market group announcing ezCard to cardholders including instructions, initial password, and Issuer's unique resource locator (URL).
4. Cardholder goes to Issuer's URL and enters the password given in the mailer.
5. The system accesses the associated account and asks for personal information such as "Mother's Maiden Name" or PIN to confirm her identity. Cardholder selects a button "Click to Activate your Electronic Card". The system then downloads, installs, and launches ezCard. Cardholder chooses a personal password and enters shipping address, e-mail address, and phone number. ezCard is then ready for use.
6. The system issues tracking certs, or other tracking mechanisms, for license control and audit trails
7. Alternatively, a Payment Authorisation (CA) service could be used for authentication or SET certs
8. A cardholder could also apply on-line for a card
9. If approved, ezCard could be issued in real-time and a physical card mailed
10. Cardholder goes shopping at an Internet merchant, finds what he wants, and places it in his shopping cart. When he is ready to buy, the merchant web site asks for address and payment information.
11. Cardholder launches his ezCard by simply clicking a desktop icon or dragging and dropping the icon onto the merchant page. ezCard launches in another window, which displays card issuer logo and advertising, shows the name and graphical representation of associated physical details of the card (not the number or expiry), and requests a password.
12. Cardholder enters personal password for verification, then drags ezCard to merchant's payment page to auto-fill the form
13. ezCard sends merchant's URL to the system to see if it is in the merchant profile database
14. At the same time, ezCard sends cookie (if available for use) to the system, and receives targeted advertising message from ad database
15. If merchant's profile is in the system database, then payment page is auto-populated, with ezCard automatically filling out the necessary information on the merchant site (cardholder name, address, e-mail, card details, etc)
16. If not, notification is sent to merchant Profile Service, which maintains a master database of known merchant profiles
17. The Profile Service profiles the site in question and updates the master database
18. New profiles are then distributed to all the system merchant profile databases on a recurring basis, resulting in all the system customers benefiting from the sum total of *all* cardholder purchase activity.
19. Alternatively, payment information manually entered by a cardholder can serve as the basis for preliminary profiling on a previously unknown merchant page.
20. The system can also connect to a fraud detection service for fraud screening. Fraud screening could extend to authenticating the merchant in question, or identifying fraudulent use (e.g. theft) of the physical card associated with an ezCard that is valid.
21. Cardholder reviews the completed merchant form and submits it. When payment is submitted, ezCard directs the system to capture transaction details.
22. After payment is authorized, the cardholder receives a graphical representation of a charge slip that psychologically reinforces the fact that a payment transaction was completed - a key factor to cardholder comfort level and ease of mind
23. This sales receipt can be sent via e-mail, stored within the system, or on the card-holder's PC and can be used as any payment slip in a card-present transaction.

It will be appreciated that since the information and data is downloaded directly onto the card users computer that effectively you could almost describe it as one click commerce in the sense that all the card user requires, presuming that the computer has the normal mouse control, is to simply point at various command icons, click once and the information is downloaded. The advantage of this is that all the information is entered onto the merchant payment page as if it was entered manually by the card holder and it is envisaged that the information will be transmitted by encryption and, for example, it is envisaged that various suitable encryption systems may be used, such as Secure Sockets Layer (SSL), this encryption system which is widely used over the Internet provides up to 128 bit data encryption support. It is envisaged that the encryption can also be by secure electronic transmission (SET), Cert-Less Set, Merchant-Originated set (MOSET), or indeed any other encryption system.

It will be appreciated that for the card issuer there are considerable advantages in that the card issuer now has an opportunity to deliver messages throughout the purchase transaction to the card holder and further to display prominently the card issuer's logo, Trade Marks, etc. on forms and information downloaded to the card-holder. Further, it will be possible for the card issuer to sell advertising and promotional space to other companies and thus could realise a significant revenue stream for the card issuer.

A further advantage of the present invention is that it will allow card issuers to target their card holders with very specifically designed advertising. They already have a considerable amount of information on their card holders by virtue of an analysis of previous purchases from which they always build up card holder profiles. Using these card holder profiles and in particular the specific information given to them at each purchase, whether it be information in relation to the merchant being purchased from, or the actual items being purchased, the card issuer has a unique opportunity to very dearly target the advertising messages to the card holder. Further, in many situations during a purchase operation there will be time lags, indeed in the actual operation itself which can be utilised and further the card issuer can determine the length of these time lags.

Another major advantage of the present invention is that minimal card holder information needs to be stored on the card holders computer, while the bulk of the card holder information can be stored on the card issuers computer, or secure server.

It will also be appreciated that with the present invention that these electronic payments assist the financial institution by lowering the amount of data entry required and thus the likelihood of error and it generally reduces transaction costs.

It is envisaged that instead of the use, for example, of a computer by the card holder that a mobile phone could be easily configured to carry out the functions described above. This could have a considerable advantage for not just simply card-remote transactions, but also what would effectively be the same as card-present transactions in that on arriving at an outlet the mobile phone could be used to produce the necessary trade with the merchant through the merchant's own computer in front of the customer, without the need for the customer to carry a credit card with him or her. It in tum makes the theft of the payment card with consequent disclosure of the payment card number which is a continual problem for most payment card holders less common.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A method for the secure transfer of payment and related purchase information over a network sales system for a payment card transaction, the system including a plurality of card holder computers (4), a card issuer computer (6), merchant computers (3) and at least one merchant payment acquirer computer (11) comprising:
the initial act of downloading payment card configuration and initiation data from a card issuer (5) to the card holder computer (4) and then there is subsequently performed the acts not necessarily in this order of:
a payment request is sent from the merchant computer (3) to the card holder computer (4);
the card holder computer (4) contacts the card issuer computer (6) and issues a transaction initiation request;
the card issuer computer (6) opens a direct communications link with the card holder computer (4);
the card holder computer (4) sends merchant and purchase information to the card issuer computer (6);
the card issuer computer (6) sends card payment information to the merchant computer (3);
the card holder computer (4) authorises the payment to the card issuer computer (6);
the card issuer computer (6) causes confirmation of the payment authorisation to be sent to the merchant computer (3); and
the merchant computer (3) confirms the transaction.

2. A method as claimed in claim 1 in which the card issuer computer (5) confirms the payment authorisation directly to the merchant computer (3).

3. A method as claimed in claim 2 in which additionally on sending payment authorisation to the merchant computer (3) the payment authorisation and purchase information is sent by the card issuer computer (6) to the merchant payment acquirer computer (11).

4. A method as claimed in claim 1 in which on the card issuer computer (6) sending card payment information to the merchant computer the steps are performed of:
the merchant computer (3) places a payment card authorisation request with the merchant payment acquirer computer (11);
the merchant payment acquirer computer (11) contacts the card issuer computer (6);
the card issuer computer (6) on receiving authorisation from the card holder computer (4) authorises the payment to the merchant payment acquirer computer (11);
the card issuer computer (6) confirms the authorisation to the merchant payment acquirer computer (11).

5. A method as claimed in claim 4 in which the merchant payment acquirer computer (11) confirms to the merchant computer (3) the payment authorisation.

6. A method as claimed in any preceding claim in which the card issuer computer (6) stores all the payment card information.

7. A method as claimed in any preceding claim in which the card holder computer (4) stores communications and other protocols including an authentication protocol for initiating the use of the method.

8. A method as claimed in any preceding claim in which the card issuer computer (6) stores necessary merchant information to complete the transaction with the merchant computer (3).

9. A method as claimed in any preceding claim in which the card issuer computer (6) downloads all relevant merchant card and purchase information as a merchant payment form to the card holder computer (4) during the transaction.

10. A method as claimed in claim 9 in which the merchant payment form is displayed on the card holder computer (4) in the same format as that of a conventional card payment slip during a card present transaction.

11. A method as claimed in any preceding claim in which during the purchase and payment transaction until the card holder computer (4) authorises payment the card holder computer (4) can alter the transaction.

12. A method as claimed in any preceding claim in which the card holder computer (4) displays messages from the card issuer computer (6) during the transaction said messages being additional to those required for the operation of the transaction.

13. A method as claimed in claim 12 which the messages are displayed during time intervals when the display of transaction information is not required.

14. A method as claimed in claim 12 or 13 in which the messages are linked to merchant information stored in the card issuer computer (6).

15. A method as claimed in any of claims 12 to 14 in which the messages are linked to card holder information on the card issuer computer (6).

16. A method as claimed in any of claims 12 to 15 in which the messages are linked to purchase information sent to the card issuer computer (6) in the current or previous payment card transactions.

17. A method as claimed in any preceding claim in which the commands are inputted by using a command icon on the screen of the card holder computer (4).

18. A method as claimed in any preceding claim in which the merchant card and purchase information are printed in the form of a card-present payment card payment slip by the card holder computer (4) on completion of the transaction claim.

19. A method as claimed in any preceding claim in which subsequently the card issuer computer (6) sends to the card holder computer a payment card charge slip.

20. A method as claimed in any of claims 1 to 18 in which subsequently the card issuer computer (6) stores a payment card charge slip for future transmission.

21. A method as claimed in any preceding claim in which the data transmitted is encrypted.

22. A method as claimed in any preceding claim in which the card holders payment card number is not transmitted to the merchant computer (3), a purchase payment authorisation number being used when transmitting payment authorisation to the merchant computer (3) the payment card number being only issued to the payment acquirer computer (11).

23. A method as claimed in any of claims 1 to 21 in which the card holders payment card number is not transmitted to other than the card holder computer and a purchase payment authorisation number is transmitted as required to other computers.

24. Apparatus for carrying out the method as claimed in any preceding claim in which the cardholder computer (4) is in the form of a mobile phone.
